# EUROPÄISCHE PATENTSCHRIFT

(11) **EP 1 157 052 B1**
(45) Veröffentlichungstag und Bekanntmachung des Hinweises auf die Patenterteilung: **05.11.2003**
(21) Anmeldenummer: 00914039.3
(22) Anmeldetag: 23.02.2000
(51) Int. Cl.: C08F 283/08, C08F 2/36, C08F 285/00

(54) **VERFAHREN ZUR HERSTELLUNG FUNKTIONALISIERTER POLYPHENYLENETHER**
METHOD OF PREPARING FUNCTIONALIZED POLYPHENYLENE ETHERS
PROCEDE DE PREPARATION D'ETHERS DE POLYPHENYLENE FONCTIONNALISES

(30) Priorität: 03.03.1999 DE 19909219
(43) Veröffentlichungstag der Anmeldung: 28.11.2001
(73) Patentinhaber: Kometra Kunststoff-Modifikatoren und Additiv AG, 82031 Grünwald (DE)
(72) Erfinder: GERECKE, Jochen, D-06122 Halle (DE); STUDE, Joachim, D-04279 Leipzig (DE)
(74) Vertreter: Schinke, Herbert, Dr. Dr.,
(86) Internationale Anmeldenummer: DE0000504
(87) Internationale Veröffentlichungsnummer: WO00052074

(56) Entgegenhaltungen:
- EP-A- 0 253 123
- EP-A- 0 314 000
- EP-A- 0 408 255
- US-A- 4 278 777
- US-A- 4 456 736
- US-A- 4 914 153

## Beschreibung

Die Erfindung betrifft ein Verfahren zur Herstellung funktionalisierter Polyphenylenether mittels Pfropfung niedermolekularer, funktionelle Gruppen besitzender Verbindungen.

Die Polyphenylenether (PPE) besitzen eine ausgewogene Kombination von chemischen, mechanischen, thermischen und elektrischen Eigenschaften in einem weiten Bereich zwischen der Kältebruchtemperatur von etwa -170 °C und der Wärmeformbeständigkeitstemperatur von etwa 190 °C. Die Anwendbarkeit der PPE ist aber auf Grund ihrer schwierigen Verarbeitbarkeit, ihrer für wichtige Anwendungen nicht ausreichenden mechanischen Eigenschaften und auch aus Kostengründen begrenzt. Deshalb werden PPE im allgemeinen in Form ihrer Blends mit verträglichen Styrolpolymeren (US 3356761, US 3383435, US 4038543), gegebenenfalls über die Herstellung von styrol-gepfropften PPE (US 4097556, US 4339376, US 4386176, US 4483958), oder auch - bei gleichzeitigem Zusatz eines Verträglichkeitsvermittlers - mit unverträglichen teilkristallinen Polymeren, insbesondere Polyamiden (US 4315086, US 4732938, US 4859739, EP 0270796, EP 0501175) und gesättigten Polyestern (EP 0268280, EP 0282052, WO 87/07279), verwendet. Die PPE/Polymer-Blends enthalten oft ein mineralisches Verstärkungsmaterial und häufig ein Elastomer (US 4863996, US 4772664, EP 295103, WO 88/08433).

Die Adhäsion von PPE ist besonders gegenüber polaren Kunststoffen und Verstärkungsmaterialien niedrig, weshalb der unpolare Charakter des PPE mittels Modifizierung, im allgemeinen durch inführung funktioneller Gruppen, verändert wird. Die häufigste ethode ist die Pfropfung einer mindestens eine Carboxyl-, Säueanhydrid-, Epoxy- oder andere funktionelle Gruppe besitzenden Monomerverbindung auf das PPE (EP 0301404, EP 0268486, WO 88/08433, WO 87/00540, US 4315086). Bevorzugt angewendet wird die Pfropfmodifizierung von PPE oder PPE/Polystyrol(PS)-Blends in der Schmelze (Monographie: O. Olabisi; Polymer-Polymer Miscibility, 1979, S. 179-189, S. 224-230, S. 245). In Abwesenheit flüssiger Lösungs-, Verdünnungs- und Dispergiermittel sowie zumeist unter Verwendung von Maleinsäureanhydrid (MSA) als Funktionsmonomer und eines Peroxids als Radikalbildners wird die Pfropfung in einem Extruder oder anderen Schmelze-Reaktor durchgeführt (EP 0222246, EP 0223116, EP 0254048, EP 0416435, EP 0501175, WO 86/02086, WO 87/00504).
Bekannt ist auch die MSA-Schmelzepfropfung in Abwesenheit eines radikalischen Initiators, insbesondere für geringere MSA-Pfropfanteile von etwa 0,1 bis maximal 1 Ma.-% (US 4654405, EP 0232363), d. h., unter Bedingungen, bei denen sowohl eine Vernetzung als auch ein Abbau des PPE eingeschränkt ist. Anstelle von MSA als Modifiziermittel werden oft auch Fumarsäure (EP 0501175, EP 098365, US 4888397, US 4751268), Salicylsäure (EP 0498282), Itaconsäure (US 4654505), Trimellithsäureanhydridchlorid (US 4745157) und Glycidylmethacrylat (WO 87/07279) eingesetzt.

Lösungs-, Suspensions- und andere Dispersionspfropftechnologien, die flüssige Trägerphasen verwenden, besitzen auf Grund ihrer Unwirtschaftlichkeit sowie der geringen erreichbaren Modifizierungsgrade kein kommerzielles Interesse. Die Funktionalisierung, vorzugsweise die Maleinierung, in der Schmelze weist trotz ihrer vielfachen technischen Nutzung verschiedene Nachteile auf. Die bei hohen Temperaturen, im allgemeinen im Extruder zwischen 270 und 330 °C durchgeführten Reaktionen verlaufen oft mit erheblichen Nebenreaktionen, insbesondere Polymervernetzung und Polymerabbau (Degradation). Außerdem ist zumeist eine aufwendige Vakuumentgasung für die Abführung von nicht umgesetzten Monomeren notwendig. Die Variationsmöglichkeiten hinsichtlich des Funktionalisierungsgrades, besonders höhere Konzentrationen an gepfropften Carboxyl-, Säureanhydrid- und anderen funktionellen Gruppen, sind somit stark eingeschränkt.

Aufgabe der vorliegenden Erfindung war es daher, ein verbessertes Verfahren zur Funktionalisierung von PPE mittels funktionelle Gruppen besitzender Verbindungen unter starker Zurückdrängung der Vernetzung und des Abbaus des Polymersubstrates bei gleichzeitiger Erhöhung des PPE-Funktionalisierungsgrades zu entwickeln.

Demgemäß wurde ein Verfahren zur Herstellung funktionalisierter PPE gefunden, welches dadurch gekennzeichnet ist, daß PPE mittels niedermolekularer, mindestens eine Carboxyl- und/oder eine Säureanhydrid- und/oder eine Amid- und/oder eine Imid- und/oder eine Hydroxyl- und/oder eine Epoxy- und/oder eine Aminund/oder eine Silangruppe enthaltender Verbindungen unter Festphasenreaktionsbedingungen im Temperaturbereich zwischen 60 und 250 °C, vorzugsweise zwischen 100 und 200 °C, funktionalisiert werden.

Die Funktionalisierung stellt eine chemische Modifizierung des vorgelegten Polymeren mittels Pfropfung funktioneller Verbindungen als Einzelmolekül oder als polymerisierte bzw. copolymerisierte Kette auf die Rückgratkette des Substratpolymers dar.

Die für die Funktionalisierung in Betracht kommenden PPE sind bekannt. Sie werden vorzugsweise durch oxidative Kupplung von in ortho-Stellung ein- oder zweifach substituierten Phenolen hergestellt (US 3661848, US 3378505, US 3306874, US 3306875, US 3639656).

Als Beispiele für Substituenten sind Halogenatome oder kurzkettige Alkylreste, insbesondere Methyl-, Ethyl-, Propyl- oder Butylreste, zu nennen. Die Alkylreste können wiederum durch Halogenatome oder durch Hydroxylgruppen substituiert sein. Weitere mögliche Substituenten sind Alkoxyreste sowie mit bis zu 4 Kohlenstoffatomen oder gegebenenfalls durch Halogenatome und/oder Alkylgruppen substituierte Phenylreste.

Geeignet als Polymersubstrat sind auch Copolymere verschiedener Phenole, wie z. B. Copolymere von 2,6-Dimethylphenol und 2,3,6-Trimethylphenol, sowie auch Gemische aus mindestens zwei unterschiedlichen PPE.

Vorzugsweise werden solche PPE eingesetzt, die mit vinylaromatischen Polymeren verträglich sind (A. Noshay, Block Copolymers, S. 8-10, Academic Press, 1977).

### Beispiele für PPE sind:

Poly(2, 6-dilauryl-1,4-phenylen) ether, Poly(2, 6-diphenyl-1, 4-phenylen)ether, Poly(2,6-dimethoxy-1, 4-phenylen)ether, Poly(2,6-diethoxy-1,4-phenylen)ether, Poly(2-methoxy-6-ethoxy-1,4-phenylen)ether, Poly(2,6-dichlor-1,4-phenylen)ether, Poly(2-methyl-6-phenyl-1, 4-phenylen)ether, Poly(2,6-dibenzyl-1,4-phenylen)ether, Poly(2-ethoxy-1,4-phenylen)ether, Poly (2-chlor-1,4-phenylen)ether, Poly(2,5-dibrom-1,4-phenylen)ether.

Bevorzugt werden PPE verwendet, bei denen die Substituenten C₁bis C₄-Alkylreste sind, wie Poly (2,6-dimethyl-]-1,4-phenylen) ether, Poly(2,6-diethyl-1,4-phenylen)ether, Poly (2-methyl-6-ethyl-1, 4-phenylen) ether, Poly (2-methyl-6-propyl-1,4-phenylen)ether, Poly(2,6-dipropyl-1,4-phenylen)ether. Besonders geeignet ist Poly(2,6-dimethyl-1,4-phenylen)ether.

Weiterhin sind als Polymersubstrat Blends (Legierungen) und/oder Pfropfcopolymere aus PPE und vinylaromatischen Polymeren, wie Polystyrol (PS), Poly(α-methylstyrol), aus > 50 Ma.-% Styrol aufgebauten Copolymeren und Styrol/Dien-Blockcopolymeren, insbesondere Zusammensetzungen aus 50 bis 99 Masse-% PPE und 1 bis 50 Masse-% PS, verwendbar.

Die nach oben genannten Verfahren hergestellten PPE weisen im allgemeinen eine Grenzviskosität zwischen 0,2 und 0,9 dl/g auf (gemessen in Toluol bei 25 °C), welche einem Gewichtsmittel des Molekulargewichts (M_{w}) von 10000 bis 80000 entspricht.

Von den in Betracht kommenden niedermolekularen Modifiziermitteln sind die für die bekannten Pfropfverfahren üblichen Monomeren mit mindestens einer Carboxy-, Säureanhydrid-, Hydroxy-, Epoxy-, Amino-, Silan- oder einer anderen Funktionalität geeignet. Bevorzugt können MSA, Acrylsäure, Methacrylsäure, Fumarsäure, Itaconsäure(anhydrid) sowie die jeweils entsprechenden höhermolekulareren Homologen dieser Basis-Funktionsmonomeren verwendet werden. Die niedermolekularen Modifiziermitteln sind in Mengen von bis 4 Masse %, bezogen auf die Masse des Polymersubstrates. Ausgewählte Beispiele für die weiteren genannten Funktionalitäten sind Hydroxyalkylmethacrylate, 2-Dimethylamino-alkylmethacrylate, und Tris-(alkoxy)vinylsilane und besonders Glycidylmethacrylat.

Die Funktionsmonomeren sind auch in Form ihrer Mischungen untereinander und/oder unter Zusatz von Comonomeren ohne funktionelle Gruppen, wie besonders Vinylaromaten, einsetzbar, wobei das Funktionsmonomer/Comonomer-Masseverhältnis innerhalb eines weiten Bereiches zwischen 5 bis 99 Masse-% Funktionsmonomer und 1 bis 95 Masse-% Comonomer gewählt werden kann.

Die radikalische Funktionalisierungsreaktion kann ohne Verwendung eines üblichen Radikalbildners oder - besonders zur Erreichung höherer Funktionalisierungsgrade - unter Zusatz eines Radikalbildners durchgeführt werden.

Als thermisch zerfallende Radikalbildner werden vorzugsweise peroxidische Initiatoren mit Halbwertszeiten von 5 bis 100 Minuten im Temperaturbereich von 80 bis 200 °C eingesetzt. Ausgewählte Beispiele hierfür sind:
Di(tert.butyl) peroxid, Dilauroylperoxid, Dibenzoylperoxid, Didecanoylperoxid, tert.Butylperoxy-2-ethylhexanoat, tert. Butylperoxyisobutyrat, tert.Butylperacetat, tert.Butyl-perbenzoat, 1, 1-Di (tert.butylperoxy)-3,3,5-trimethyl-cyclo-hexan, 1, 1-Di(tert.amylperoxy)cyclohexan, tert.Butylperoxy-3,3,5-trimethylhexanoat, Dicumylperoxid, tert.Butyl-hydroperoxid, 2,5-Dimethyl-2,5-di(tert.butylperoxy)hexin-3, 2,5-Dimethyl-2,5-di(hydroperoxy)hexan usw.. Weiterhin können hochverzweigte Alkane, wie z. B. 2,3-Dimethyl-2,3-diphenyl-butan, 3,4-Dimethyl-3,4-diphenylhexan usw., und auch Diazoverbindungen, beispielsweise 2,2' -Azo-bis (isobutyronitril), 2,2' -Azo-bis (2-methylbutyronitril) usw., als Radikalbildner eingesetzt werden.

Eine spezielle Variante der Funktionalisierung ist die Verwendung funktioneller Peroxyester, die einerseits als Radikalbildner fungieren und andererseits auf Grund ihrer Carboxy-Funktionalität als PPE-Modifizieragens wirksam sind, so daß auf den Einsatz des Funktionsmonomers verzichtet werden kann.

Geeignete carboxylgruppenhaltige Peroxyester sind tert.Butylperoxy-maleinsäure, tert.Amyl-peroxy-maleinsäure, tert.Butylperoxy-itaconsäure, tert.Butyl-peroxy-bernsteinsäure und tert.Amyl-peroxy-bernsteinsäure (EP 0474227, WO 95/11938), von denen die beiden erstgenannten ungesättigten Peroxyester zu bevorzugen sind.

Der spezielle Initiatoreinsatz, d.h., Art (chemische Struktur)/Halbwertszeit und die auf die Masse des PPE-Substrates bezogene Konzentration, richtet sich nach den gewählten Festphasenpfropfbedingungen.

Die erfindungsgemäße PPE-Pfropfmodifizierung kann diskontinuierlich, gegebenenfalls unter Nachdosierung des Monomers (Baten-Fahrweise), oder auch kontinuierlich, z. B. unter Verwendung eines kontinuierlich arbeitenden horizontalen oder vertikalen Reaktors oder einer anderen geeigneten Mischvorrichtung durchgeführt werden.

Entsprechend einer technologisch bevorzugten Ausführungsform wird das ethylenisch ungesättigte Pfropfagens (Funktionsmonomer, funktioneller Peroxyester) und gegebenenfalls Radikalbildner (organisches Peroxid oder auch eine Diazoverbindung) mit den festen PPE-Teilchen in einem Mischer oder einem anderen für eine intensive Vermischung geeigneten Gefäß in Kontakt gebracht, dispergiert und der Reaktionsvorrichtung zugeführt. Die Temperaturen des Mischers und Reaktors werden je nach gewünschtem technologischen Fahrregime, insbesondere unter Berücksichtigung der Art und Konzentration der Reaktionskomponenten, des Durchsatzes bzw. Füllgrades sowie der speziellen Ausführungsform der Vorrichtung, festgelegt. Nach Beendigung der Reaktion wird der Reaktor gekühlt und mit Stickstoff durchspült.
Die dem Reaktor entnommenen Reaktionsprodukte haben keine störenden Nebenprodukte und sind direkt, d. h., ohne jede weitere Nachbehandlung, ihrem Verwendungszweck, z. B. als Verträglichkeitsvemittler in PPE/Polyamid-Blends, zuführbar. Diesbezüglich sind vor allem geschlossene Systeme mit einem kontinuierlich betriebenem Reaktor und entsprechenden Zufuhr- und produktentnahmekreisläufen vorteilhaft.

Ein weiterer Vorteil des erfindungsgemäßen Prozesses gegenüber den bekannten Verfahren besteht in seiner hohen Wirtschaftlichkeit, der einfach zu handhabenden Prozeßführung bei gleichzeitig breiter Variationsmöglichkeit hinsichtlich des PPE-Funktionalisierungsgrades und der Sicherung eines hohen Qualitätsniveaus der pfropfmodifizierten PPE bzw. PPE-Blends (Vermeidung bzw. starke Einschränkung der PPE-Vernetzung und -Degradation).

Es war nicht vorherzusehen, daß im Vergleich zur üblicherweise kommerziellen Schmelze-Pfropfmodifizierung von PPE im Temperaturbereich von 270 bis 330 °C mittels erfindungsgemäßer Festphasen-Pfropffunktionalisierung bei Temperaturen vorzugsweise zwischen 100 und 200 °C maßgeschneiderte funktionalisierte PPE und PPE/PS-Legierungen mit einem insgesamt verbesserten Kennwertniveau zu erhalten sind.

Das Verfahren wird anhand der nachfolgenden Beispiele näher erläutert, ohne die Erfindung einzuschränken. Alle Prozentangaben beziehen sich, sofern nichts anderes angegeben ist, auf die Masse des Polymersubstrates (Masse-%).

### Beispiele

### Beispiel 1

In einem temperierbaren und mit einer Rührvorrichtung ausgerüsteten vertikalen Reaktor werden 100 Masseteile pulveriger Poly(2,6-dimethyl-1,4-phenylen)ether [zahlenmittlere Molmasse Mₙ = 19000/ Grenzviskosität (Toluol/25 C) = 0,37 dl/g; Glasübergangstemperatur (T_{g}) = 214,5 °C und Schmelztemperatur (Tₘ) = 245 °C; im weiteren unter der Kurzbezeichnung "PPE"] vorgelegt. Anschließend werden 3% MSA und 2,4 % 2,5-Dimethyl-2,5-di(tert.butylperoxy)hexin-3 (DMBPH) hinzugefügt und der Reaktor mittels Stickstoff Sauerstoffrei gespült. Nach 10-minutiger Dispergierung bei 80 °C wird der Reaktor auf 180 °C erwärmt. Nach 20-minütiger Reaktion bei dieser Temperatur T_{R} wird die Reaktion mittels Kühlung und Stickstoffspülung beendet. Vom Reaktionsprodukt, das ohne weitere Bearbeitung für die vorgesehene Anwendung, z. B. als Verträglichkeitsvermittler, verfügbar ist, wird zwecks Bestimmung der interessierenden Kennwerte eine Probe einer 6-stündigen Extraktion mit siedendem Methanol unterworfen. Aus dem Eluat wird ein nicht gepfropfter MSA-Anteil von 0,14 % und im Rückstand ein gepfropfter MSA-Anteil von 1,9 % ermittelt.

### Beispiele 2 bis 20

Mittels Variation des Initiators gemäß gewählter Reaktionstemperatur T_{R,} Art und Konzentration des Funktionsmonomers, des Polymersubstrates [in Beispielen 1 bis 15: PPE; in den Beispielen 16 bis 20: eine 90 % PPE/10 % Polystyrol(PS)-Legierung mit gleicher Dichte wie die des PPE von 1,06 g/cm³ und T_{g} von 197 °C] werden - basierend auf der Technologie des Beispiels 1-weitere, die erfindungsgemäße Produktvielfalt charakterisierende pfropfmodifizierte PPE(/PS)-Harze (Legierungen) hergestellt.

Verwendet wurden nachfolgende Reaktionskomponenten:
- Polymersubstrat:: obengenannte PPE und PPE/PS-Legierung
- Funktionsmonomer:: MSA, Acrylsäure (AS), Fumarsäure (FS),
Itaconsäureanhydrid (ISA)
Glycidylmethacrylat (GMA)
Tris(2-methoxyethoxy) vinylsilan (VS)
- Comonomer:: Styrol (St)
- Initiator:: Dilauroylperoxid (LPO)
Dibenzoylperoxid (BPO)
Dicumylperoxid (CPO)
2,5-Dimethyl-2, 5-di (tert.butylperoxy)hexin-3 tert.Butyl-peroxy-maleinsäure (TBPM)

In den Beispielen werden Reaktionszeiten zwischen 10 und 30 Minuten, entsprechend der etwa 5-fachen Halbwertszeit (HWZ)der verwendeten Initiatoren für die entsprechenden T_{R} verwendet. Als Orientierung dienten die 3-min-Halbwertstemperaturen für

| | |
|---|---|
| LPO | 105 °C |
| BPO | 120 °C |
| TBPM | 155 °C |
| CPO | 165 °C |
| DMBPH | 180 °C |

In Tabelle 1 sind die Polymerisationsparameter, d. h., Initiatorart und -konzentration (Spalten 2 und 3), Monomerart und - konzentration (Spalten 4 und 5) und Reaktionstemperatur, T_{R} (Spalte 6), aufgeführt. Zum Vergleich sind analoge Schmelze-Pfropfprodukte, hergestellt in einem Doppelschneckenextruder (Länge/Durchmesser-Verhältnis von 20/1, mittlere Verweilzeit von 5 min, Zylindertemperaturen von 280 bis 325 °C) unter Verwendung von 3,3,4,4-Tetraphenyl-hexan (TPH) oder 2,3-Dimethyl-2,3-diphenylbutan (DMPB) als Radikalbildner angegeben (Vgl. Nr. 1, 6, 12, 14, 16, 20).

Wie im Beispiel 1 beschrieben, sind für die Charakterisierung der modifizierten PPE und PPE/PS-Legierungen mittels fraktionierter Extraktion die Pfropfausbeute (PfA) als das Verhältnis der Masse an gepfropftem Modifiziermittel (Funktionsmonomer oder funktioneller Peroxyester) zur gesamten umgesetzten (im Eluat und Rückstand ermittelten) Modifiziermittelmasse (Spalte 7) und der Pfropfungsgrad (PfG) als die auf die vorgelegte PPEbzw. PPE/PS-Masse bezogene Modifiziermittelmasse ermittelt worden (Spalten 8) .

**Tabelle 1**

| Nr. | Initiator | | Monomer | | T_{R} | PfG | PfA |
|---|---|---|---|---|---|---|---|
| | Art | % | Art | % | °C | % | % |
| 1 | DMBPH | 2,4 | MSA | 3,0 | 180 | 1,9 | 93 |
| Vgl.1 | TPH | 0,2 | MSA | 3,0 | 285 | 1,3 | 74 |
| 2 | DMBPH | 2,4 | MSA | 1,0 | 180 | 0,9 | 98 |
| 3 | DMBPH | 2,4 | MSA | 2,0 | 190 | 1,5 | 94 |
| 4 | DMBPH | 2,4 | MSA | 4,0 | 185 | 2,5 | 90 |
| 5 | DMBPH | 2,4 | AA | 3,0 | 180 | 2,2 | 87 |
| 6 | DMBPH | 2,4 | FA | 3,0 | 180 | 2,0 | 87 |
| Vgl.6 | DMPB | 0,1 | FA | 3,0 | 320 | 0,8 | 56 |
| 7 | CPO | 2,3 | MSA | 3,0 | 165 | 1,7 | 81 |
| 8 | BPO | 2,0 | MSA | 2,0 | 120 | 1,5 | 88 |
| 9 | DMBPH | 2,0 | MSA | 3,0 | 190 | 2,2 | 95 |
| 10 | TBPM | 1,0 | ohne | | 145 | 0,5 | 77 |
| 11 | TBPM | 2,0 | ohne | | 145 | 0,9 | 74 |
| 12 | TBPM | 3,0 | ohne | | 145 | 1,3 | 72 |
| Vgl.12 | TBPM | 3,0 | ohne | | 320 | 0,7 | 53 |
| 13 | ohne | (2h) | MSA | 1,0 | 190 | 0,7 | 88 |
| 14 | ohne | (3h) | FS | 3,0 | 160 | 1,2 | 63 |
| Vgl.14 | ohne | | FS | 3,0 | 285 | 0,5 | 31 |
| 15 | LPO | 2,0 | AS/40%St | 2,0 | 105 | 1,3 | 82 |
| 16 | DMBPH | 2,0 | MSA | 3,0 | 180 | 2,0 | 87 |
| Vgl.16 | DMPB | 2,0 | MSA | 3,0 | 320 | 1,4 | 68 |
| 17 | DMBPH | 2,4 | ISA | 3,0 | 190 | 1,8 | 81 |
| 18 | CPO | 2,0 | FS | 2,0 | 165 | 1,2 | 77 |
| 19 | BPO | 1,0 | AS | 3,0 | 120 | 2,2 | 83 |
| 20 | TBPM | 3,0 | ohne | | 145 | 1,4 | 76 |
| Vgl.20 | TBPM | 3,0 | ohne | | 285 | 1,0 | 59 |
| 21 | DMBPH | 3,0 | GMA | 3,0 | 180 | 2,1 | 88 |
| 22 | CPO | 2,0 | VS | 2,0 | 165 | 1,3 | 81 |

### Beispiele 23 bis 32

In einem temperierbaren, kontinuierlich arbeitenden Reaktor, ausgerüstet mit einer horizontalen beheizbaren Rührerwelle, versehen mit Knet- und Mischelementen, die einen axialen Transport der in einem vorgeschalteten Mischer dispergierten trockenen, fluiden aus dem Polymersubstrat (Beispiele 23 bis 27: PPE; Beispiele 28 bis 32: PPE/PS) und Monomer(en) und/oder peroxidischer Verbindung bestehenden Vormischung sichern, werden die in Tabelle 2 aufgeführten Reaktionssysteme eingesetzt. Der Reaktor wird über einen die Vormischung enthaltenden, verschließbaren Vorratsbehälter, in der die Schüttung mit Stickstoff durchströmt wird, beschickt und das Reaktionsprodukt - im allgemeinen nach einer von den Prozeßbedingungen abhängigen Verweilzeit zwischen 15 und 45 Minuten - über eine beheizte Zweiklappenschleuse dem Reaktor entnommen. Die anschließende Bestimmung der Pfropfausbeute und des Pfropfungsgrades erfolgt analog der im Beispiel 1 angeführten Extraktion.

**Tabelle 2**

| Nr. | Initiator | | Monomer | | T_{R} | PfG | PfA |
|---|---|---|---|---|---|---|---|
| | Art | % | Art | % | °C | % | % |
| 23 | DMBPH | 1,0 | MSA | 1,0 | 180 | 0,8 | 93 |
| Vgl.23 | DMPB | 1,0 | MSA | 1,0 | 320 | 0,5 | 60 |
| 24 | DMBPH | 2,0 | FS | 3,0 | 180 | 1,7 | 71 |
| 25 | BPO | 2,0 | AS/40%St | 2,0 | 120 | 1,2 | 68 |
| 26 | CPO | 1,0 | ISA | 2,0 | 165 | 1,1 | 65 |
| 27 | ohne | | MSA | 1,0 | 190 | 0,6 | 69 |
| 28 | TBPM | 2,0 | ohne | | 145 | 0,8 | 65 |
| Vgl.28 | TBPM | 2,0 | ohne | | 285 | 0,4 | 31 |
| 29 | TBPM | 1,0 | ohne | | 145 | 0,6 | 84 |
| 30 | LPO | 2,0 | AS | 3,0 | 100 | 2,2 | 86 |
| 31 | CPO | 2,0 | MSA | 2,0 | 165 | 1,3 | 75 |
| 32 | DMBPH | 2,4 | MSA | 3,0 | 190 | 2,1 | 85 |
| Vgl.32 | TPH | 1,0 | MSA | 3,0 | 285 | 1,4 | 63 |

Aus den aufgeführten Ergebnissen, insbesondere der Gegenüberstellung der Festphasen- mit den in Tabellen 1 und 2 aufgeführten Schmelzepfropfsystemen, ist zu sehen, daß die erfindungsgemäß funktionalisierten PPE und PPE/PS/-Legierungen sich durch hohe Pfropfungsgrade und -ausbeuten auszeichnen.

Die deutlich höheren Pfropfparameter bewirken in Blends und Compositen eine stärkere Adhäsion gegenüber unverträglichen Polymeren, wie Polyamiden (bevorzugt PA 6 und PA 66), und Verstärkungsstoffen, insbesondere Glas fasermaterialien.

### Anwendungsbeispiel

Ausgewählte funktionalisierte PPE-Harze (Beispiele 1 und 23) und PPE/PS-Legierungen (Beispiele 16 und 28) sowie die entsprechenden Schmelzepfropfprodukte (Vergleichs-Beispiele Vgl. 1, Vgl. 23; Vgl. 16 und Vgl. 28) werden in einem Zweiwellenextruder bei einer Zylindertemperatur von 285 °C mit einem gleichen Masseanteil Polyhexamethylenadipinamid [PA 66, mit einer Viskositätszahl (Lösung 0,005 g/ml Schwefelsäure) von 185 ml/g] gemischt. Die Schmelze wird durch ein Wasserbad geleitet und granuliert, das getrocknete Granulat danach bei 270 °C zu Prüfkörpern entsprechend den Vorgaben der jeweiligen DIN- bzw. ISO-Norm gespritzt. Die Ermittlung der mechanischen Kennwerte ergibt für die Zug- (Streckspannung und -dehnung nach DIN 53445) und Biegeeigenschaften (Biegespannung und -dehnung nach DIN 53452, Biege-Elastizitätsmodul nach DIN 53457) keine signifikanten Unterschiede zwischen den Compounds auf Basis der erfindungsgemäß funktionalisierten PPE bzw. PPE/PS-Legierung und der mittels Vergleichs-Schmelzepfropfung modifizierten PPE bzw. PPE/PS-Legierung. Demgegenüber besitzen die Compounds auf Basis der in der Festphase funktionalisierten PPE bzw. PPE/PS-Legierung gegenüber den entsprechenden Vergleichsprodukten eine um durchschnittlich 20 % höhere Schlagzähigkeit sowie eine um durchschnittlich 25 % höhere Kerbschlagzähigkeit (CHARPY-Kennwert gemäß ISO 179).

## Patentansprüche

1. Verfahren zur Herstellung funktiohalisierter Polyphenylenether mittels funktionelle Gruppen besitzender Verbindungen, **dadurch gekennzeichnet, dass**
- Polyphenylenether mit gewichtsmittleren Molmassen von 10000 bis 80000, allein oder in Form ihrer Blends und/oder Pfropfcopolymerisate aus Polyphenylenethern und vinylaromatischen Polymeren,
- durch niedermolekulare, mindestens eine Carboxyl-, und/oder eine Säureanhydrid- und/oder eine Amid- und/oder eine Imid- und/oder eine Hydroxylund/oder eine Epoxy- und/oder eine Amin- und/oder eine Silangruppe enthaltenden Verbindungen in Mengen bis 4 Masse%, bezogen auf die Masse des Polymersubstrates,
- unter Festphasenreaktionsbedingungen im Temperaturbereich zwichen 60 und 250 °C pfropfmodifiziert werden.

2. Verfahren nach Anspruch 1, **dadurch gekennzeichnet, dass** die Festphasen-Pfropfung bei Temperaturen zwischen 100 und 200 °C durchgeführt wird.

3. Verfahren nach den Ansprüchen 1 und 2, **dadurch gekennzeichnet, dass** als Polymersubstrat Poly(2,6-dimethyl-1,4-phenylen)ether verwendet wird.

4. Verfahren nach den Ansprüchen 1 bis 3, **dadurch gekennzeichnet, dass** als Polymersubstrat Zusammensetzungen aus 50 bis 99 Masse-% Polyphenylenether und 1 bis 50 Masse% Polystyrol verwendet werden.

5. Verfahren nach den Ansprüchen 1 bis 4, **dadurch gekennzeichnet, dass** als niedermolekulares Modifiziermittel Funktionsmonomere mit mindestens einer Carboxy- und/oder Säureanhydrid- und/oder Epoxy- und/oder Hydroxy- und/oder Amino- und/oder Silan-Funktionalität ausgewählt werden.

6. Verfahren nach Anspruch 5, **dadurch gekennzeichnet, daß** als Modifiziermittel mindestens ein Monomer aus der Gruppe (Meth)Acrylsäure und Homologe und/oder der Gruppe Fumarsäure und Homologe und/oder der Gruppe Maleinsäure(anhydrid) und Homologe und/oder der Gruppe Itaconsäure(anhydrid) und Homologe und/oder unter Glycidylmethacrylat und/oder einem Hydroxyalkylmethacrylat und/oder einem 2-Dimethylamino-alkylmethacrylat und/oder einem Tris(alkoxy)vinylsilan ausgewählt wird.

7. Verfahren nach den Ansprüchen 1 bis 6, **dadurch gekennzeichnet, daß** das Funktionsmonomer oder Funktionsmonomergemisch unter Zusatz mindestens eines Comonomers aus der Reihe der Vinylaromaten entsprechend einem Verhältnis zwischen 5 bis 99 Masse-% Funktionsmonomer und 1 bis 95 Masse-% Comonomer eingesetzt wird.

8. Verfahren nach den Ansprüchen 1 bis 7, **dadurch gekennzeichnet, daß** die Reaktion ohne Verwendung eines in freie Radikale zerfallenden Initiators durchgeführt wird.

9. Verfahren nach den Ansprüchen 1 bis 7, **dadurch gekennzeichnet, daß** die Reaktion unter Verwendung eines in freie Radikale zerfallenden Initiators durchgeführt wird.

10. Verfahren nach Anspruch 9, **dadurch gekennzeichnet, daß** die Reaktion unter Verwendung mindestens eines peroxidischen Initiators mit einer Halbwertszeit von 5 bis 100 Minuten im Temperaturbereich von 80 bis 200 °C durchgeführt wird.

11. Verfahren nach den Ansprüchen 1 bis 4, **dadurch gekennzeichnet, daß** die Reaktion mittels carboxylgruppenhaltiger Peroxyester in Abwesenheit funktioneller Monomerer durchgeführt wird.

12. Verfahren nach Anspruch 11, **dadurch gekennzeichnet, daß** der Peroxyester ausgewählt wird unter den Verbindungen tert.Butyl-peroxy-maleinsäure, tert.Amyl-peroxy-maleinsaure, tert.Butyl-peroxy-itaconsäure, tert.Butyl-peroxybernsteinsäure und tert.Amyl-peroxy-bernsteinsäure.

13. Verfahren nach Anspruch 12, **dadurch gekennzeichnet, daß** als Peroxyester tert.Butyl-peroxy-maleinsäure und/oder tert.Amyl-peroxy-maleinsäure eingesetzt werden.

14. Verwendung der nach den Ansprüchen 1 bis 13 funktionalisierten Polyphenylenether und funktionalisierten Polyphenylenether-Legierungen als Komponente in thermoplastischen Polymerblends und Polymercompositen.

## Claims

1. A method for producing functionalized polyphenylene ethers using compounds that have functional groups, **characterized in that**
- polyphenylene ethers with averaged molar weights from 10000 to 80000, either alone or in the form of blends thereof, and/or graft copolymers of polyphenylene ethers and vinyl aromatic polymers
- using low-molecular compounds containing at least one carboxyl and/or acid anhydride and/or amide and/or imide and/or hydroxyl and/or epoxy and/or amine and/or silane group in quantities up to 4 percent by weight in relation to the weight of the polymer substrate.
- are modified by grafting under solid-phase reaction conditions at temperatures in the range from 60°C to 250°C

2. The method according to claim 1, **characterized in that** the temperature at which grafting is carried out is in the range from 100°C to 200°C.

3. The method according to claims 1 and 2, **characterized in that** poly(2,6-dimethyl-1,4-phenylene) ether is used as polymer substrate.

4. The method according to claims 1 through 3, **characterized in that** compositions of 50 to 90 percent by weight of polyphenylene ether and 1 to 50 percent by weight of polystyrol are used as polymer substrate.

5. The method according to claims 1 through 4, **characterized in that** functional monomers with at least one carboxy and/or acid anhydride and/or epoxy and/or hydroxy and/or amino and/or silane functionality are selected for use as low-molecular modifier.

6. The method according to claim 5, **characterized in that** at least one monomer selected from the group of (math) acrylic acid and homologs and/or the group of fumaric acid and homologs and/or the group of itaconic acid (anhydride) and homologs and/or from glycidyl methacrylate and/or a hydroxyalkyl methacrylate and/or a 2-dimethylamino-alkyl methacrylate and/or a tris(alkoxy)vinyl silane is used as modifier.

7. The method according to claims 1 through 6, **characterized in that** at least one comonomer from the series of vinyl aromatics is added to the functional monomer or functional monomer mixture used at a ratio of 5 to 99 percent by weight functional monomer and 1 to 95 percent by weight comonomer.

8. The method according to claims 1 through 7, **characterized in that** the reaction is carried out without an initiator that decomposes into free radicals.

9. The method according to claims 1 through 7, **characterized in that** the reaction is carried out using an initiator that decomposes into free radicals.

10. The method according to claim 9, **characterized in that** the reaction is carried out using at least one peroxidic initiator with a half-life of 5 to 100 minutes at a temperature range from 80°C to 200°C.

11. The method according to claims 1 through 4, **characterized in that** the reaction is carried out using peroxyesters containing carboxyl groups and in the absence of functional monomers.

12. The method according to claim 11, **characterized in that** the peroxyester is selected from the following compounds: tert-butyl-peroxymaleic acid, tert-amyl-peroxymaleic acid, tert-butyl-peroxyitaconic acid, tert-butyl-peroxysuccinic acid, and tert-amyl-peroxysuccinic acid.

13. The method according to claim 12, **characterized in that** tert-butyl-peroxymaleic acid and/or tert-amyl-peroxymaleic acid are used as peroxyesters.

14. Use of the polyphenylene ethers and polyphenylene ether alloys functionalized according to claims 1 through 13 as a component in thermoplastic polymer blends and polymer composites.

## Revendications

1. Procédé de préparation de polyphénylène éthers fonctionnalisés à l'aide de composés possédant des groupes fonctionnels, **caractérisé en ce que** l'on modifie par greffage
- des polyphénylène éthers ayant des masses molaires moyennes en poids de 10000 à 80000, isolément ou sous forme de leurs mélanges et/ou de copolymères greffés de polyphénylène éthers et de polymères aromatiques vinyliques,
- avec des composés de faible masse moléculaire contenant au moins un groupe carboxyle et/ou un groupe anhydride d'acide et/ou un groupe amide et/ou un groupe imide et/ou un groupe hydroxyle et/ou un groupe époxy et/ou un groupe aminé et/ou un groupe silane, en des quantités allant jusqu'à 4 % en masse par rapport à la masse du substrat polymère,
- dans des conditions de réaction en phase solide dans un domaine de température compris entre 60 et 250°C.

2. Procédé selon la revendication 1, **caractérisé en ce que** le greffage en phase solide s'effectue à des températures comprises entre 100 et 200°C.

3. Procédé selon les revendications 1 et 2, **caractérisé en ce que** l'on utilise comme substrat polymère un poly(2,6-diméthyl-1,4-phénylène)éther.

4. Procédé selon les revendications 1 à 3, **caractérisé en ce que** l'on utilise comme substrat polymère des compositions de 50 à 99 % en masse de polyphénylène éthers et de 1 à 50 % en masse de polystyrène.

5. Procédé selon les revendications 1 à 4, **caractérisé en ce que** l'on choisit comme agent modifiant de faible masse molaire des monomères fonctionnels ayant au moins une fonction carboxy et/ou anhydride d'acide et/ou époxy et/ou hydroxy et/ou amino et/ou silane.

6. Procédé selon la revendication 5, **caractérisé en ce que** l'on choisit comme agent modifiant au moins un monomère du groupé de l'acide (méth)acrylique et de ses homologues et/ou du groupe de l'acide fumarique et de ses homologues et/ou du groupe de l'acide (anhydride) maléique et de ses homologues et/ou du groupe de l'acide (anhydride) itaconique et de ses homologues et/ou parmi le méthacrylate de glycidyle et/ou un méthacrylate d'hydroxyalkyle et/ou un méthacrylate de 2-diméthylaminoalkyle et/ou un tris(alcoxy)vinylsilane.

7. Procédé selon les revendications 1 à 6, **caractérisé en ce que** l'on utilise le monomère fonctionnel ou le mélange de monomères fonctionnels en ajoutant au moins un comonomère de la série des composés aromatiques vinyliques dans des proportions comprises entre 5 et 99 % en masse de monomère fonctionnel et entre 1 et 95 % en masse de comonomère.

8. Procédé selon les revendications 1 à 7, **caractérisé en ce que** l'on effectue la réaction sans utiliser d'initiateur se décomposant en radicaux libres.

9. Procédé selon les revendications 1 à 7, **caractérisé en ce que** l'on effectue la réaction en utilisant un initiateur se décomposant en radicaux libres.

10. Procédé selon la revendication 9, **caractérisé en ce que** l'on effectue la réaction en utilisant au moins un initiateur de type peroxyde ayant un temps de demi-vie de 5 à 100 minutes dans un domaine de température de 80 à 200°C.

11. Procédé selon les revendications 1 à 4, **caractérisé en ce que** la réaction s'effectue à l'aide de peroxyesters contenant des groupes carboxyle en l'absence de monomères fonctionnels.

12. Procédé selon la revendication 11, **caractérisé en ce que** le peroxyester est choisi parmi l'acide tert-butyl-peroxy-maléique, l'acide tert-amylperoxy-maléique, l'acide tert-butyl-peroxy-itaconique, l'acide tert-butyl-peroxysuccinique et l'acide tert-amyl-peroxy-succinique.

13. Procédé selon la revendication 12, **caractérisé en ce que** l'on utilise comme peroxyester l'acide tert-butyl-peroxy-maléique et/ou l'acide tert-amylperoxy-maléique.

14. Utilisation des polyphénylène éthers fonctionnalisés et des alliages de polyphénylène éthers fonctionnalisés selon les revendications 1 à 13 comme constituants de mélanges et de composites de polymères thermoplastiques.
